# EUROPÄISCHE PATENTSCHRIFT

(11) **EP 3 613 933 B1**
(45) Veröffentlichungstag und Bekanntmachung des Hinweises auf die Patenterteilung: **29.09.2021**
(21) Anmeldenummer: 19190998.5
(22) Anmeldetag: 09.08.2019
(51) Int. Cl.: E05F 15/43, E05F 15/73

(54) **VORRICHTUNG ZUR ÜBERWACHUNG VON TÜREN, FENSTERN ODER DERGLEICHEN**
DEVICE FOR MONITORING DOORS, WINDOWS OR THE LIKE
DISPOSITIF DE SURVEILLANCE DE PORTES, FENÊTRES OU ANALOGUES

(30) Priorität: 22.08.2018 DE 102018214215
(43) Veröffentlichungstag der Anmeldung: 26.02.2020
(73) Patentinhaber: GEZE GmbH, 71229 Leonberg (DE)
(72) Erfinder: Hucker, Dr., Matthias, 76359 Marxzell (DE)

(56) Entgegenhaltungen:
- EP-A1- 0 803 632
- EP-A1- 1 619 342
- EP-A1- 2 009 215
- EP-A1- 2 226 452
- EP-A1- 2 666 946
- CN-A- 107 859 449
- US-A1- 2018 094 471

## Beschreibung

Die vorliegende Erfindung betrifft eine Vorrichtung zur Überwachung von Türen, Fenstern oder dergleichen auf Annäherung einer Person und/oder auf Hindernisse im Öffnungsbereich mit mehreren Sensoren, zugehörigen Energieversorgungsleitungen sowie mindestens einer Signalleitung zur Weitergabe eines Sensorsignals.

Zur automatischen Ansteuerung von Antrieben für Türen, Fenster oder dergleichen sowie zur Absicherung der Bewegung automatischer Tür- oder Fensterflügel werden Sensoren verwendet. Hierzu werden berührungslose Sensoren verwendet, deren physikalische Funktionsprinzipien und deren Bauform passend zu dem entsprechenden Tür- bzw. Fenstertyp sowie der jeweils geforderten Funktion ausgewählt werden. Für automatische Schiebetüren werden zum Beispiel Radarbewegungsmelder zur Ansteuerung der Türbewegung und Aktiv-Infrarot-Lichttaster zur Absicherung der Bewegung eingesetzt.

Die verschiedenen Sensoren werden oft von verschiedenen Herstellern geliefert und haben daher sehr unterschiedliche Gehäusedesigns, Anschlusstechniken und Inbetriebnahmeprozesse. Der Monteur muss sich daher mit jeder Technologie sowie mit den unterschiedlichen Sensormodellen verschiedener Hersteller auskennen und auch eine entsprechende Vielfalt an Ersatzteilen vorhalten. Die Sensoren ergeben dadurch auch kein einheitliches Erscheinungsbild. Auch ist zu jedem Sensortyp eine individuelle Dokumentation notwendig.

Die EP 2 666 946 A1 offenbart ein Verfahren zum Öffnen einer automatischen zweiflügeligen Tür, umfassend einen Bewegungsbereich, der über die gesamte Breite eines Türbereichs interessant ist, und einen Anwesenheitsbereich, der die gesamte Breite des Türbereichs interessiert und sich zwischen der Tür und dem Bewegungsbereich befindet, der umfasst folgende Aktivitäten: Überwachung der Anwesenheit von Personen oder Gegenständen in den Bereichen mittels entsprechender Bewegungs- und Anwesenheitssensoren; Sammeln eines Signals von den Sensoren, um das Öffnen und Schließen der Tür zu befehlen; Unterteilung des Bewegungsbereichs in eine Reihe benachbarter Bewegungszonen, regelmäßig in Querrichtung zum Türbereich verteilt, um die gesamte Breite des Bereichs abzudecken; Unterteilung des Präsenzbereichs in eine Reihe benachbarter Präsenzzonen, regelmäßig in Querrichtung zum Türbereich verteilt, um die gesamte Breite des Bereichs abzudecken; unabhängige Überwachung jeder der Zonen mittels eines speziellen Bewegungssensors ausschließlich zur Überwachung der Bewegung von Personen oder Gegenständen in der jeweiligen Zone bestimmt; unabhängige Überwachung jeder der Zonen mittels eines speziellen Präsenzsensors ausschließlich zur Überwachung der Anwesenheit von Personen oder Gegenständen in der jeweiligen Zone bestimmt; Senden der Signale der Sensoren an eine Logikschaltung, die die Aktivierung der Bewegungseinrichtung von mindestens einem Türblatt befiehlt, um eine Öffnung bis zu einer Gesamtbreite der von den Sensoren die aktiviert wurden; und Senden der Signale der Sensoren an eine Logikschaltung, die die Aktivierung des Bewegungsmittels von mindestens einem Türblatt befiehlt, um dessen Schließen zu verhindern.

Die EP 1 619 342 A1 offenbart eine wärmeempfindliche Anordnungsvorrichtung zum Erfassen eines Vorhandenseins eines Zielobjekts in einem Überwachungsbereich. Die Vorrichtung umfasst mehrere mindestens zwei wärmeempfindliche Sensoren, die in einer Anordnung angeordnet sind, wobei jeder wärmeempfindliche Sensor einem von mehreren entsprechenden mindestens zwei Überwachungspunkten zugeordnet ist, die in dem Überwachungsbereich enthalten sind. Jeder wärmeempfindliche Sensor umfasst ein empfindliches Element, das dazu geeignet ist, einen Teil der thermischen Infrarotstrahlung zu absorbieren, die von einem der mehreren Ziele emittiert werden, die sich innerhalb des Überwachungskegels befinden, der dem thermisch empfindlichen Sensor entspricht. Wärmeempfindliche Sensoren können Thermopiles, Bolometer oder andere Typen sein. Elektronische Schaltungen in jedem wärmeempfindlichen Sensor sind angepasst, um ein Signal zu messen, das in dem wärmeempfindlichen Sensor als Folge der Temperaturen des Ziels erzeugt wird. Die Vorrichtung kann ferner eine elektrische Multiplex-Messschaltung umfassen, die elektrisch mit den verschiedenen Sensoren gekoppelt ist. Das Gerät ist angepasst, um Differenzmessungen zwischen auswählbaren Paaren von Thermopile-Sensoren der in den entsprechenden Überwachungskegeln herrschenden Temperaturen durchzuführen.

Die CN 107 859 449 A offenbart eine Antikollisions-Induktionsvorrichtung, die für eine automatische Tür und ein automatisches Fenster geeignet ist. Die Antikollisions-Induktionsvorrichtung umfasst ein streifenförmiges Bedienfeld. Auf dem streifenförmigen Bedienfeld ist eine Sensoranordnung angeordnet, die aus mehreren Time-of-Flight Sensoren besteht. Die mehreren Time-of-Flight Sensoren sind in gleichen Intervallen entlang der langen Kanten des streifenförmigen Bedienfelds angeordnet, und zwischen der Emissionslinie oder der Reflexionslinie jeder Time-of-Flight Sensoren und dem Streifen wird ein Winkel von 45 bis 60 Grad gebildet. Das streifenförmige Bedienfeld ist ferner mit einem Prozessor und einem Eingangs- und Ausgangsanschluss versehen, und die Time-of-Flight Sensoren und der Eingangs- und Ausgangsanschluss sind mit dem Prozessor verbunden.

Die EP 0 803 632 A1 offenbart Türverkleidung, die betätigt wird, wenn ein in der Nähe der Türverkleidung angeordneter Betätigungssensor ein Objekt erfasst, das sich der Türverkleidung nähert. Wenn ein an der Türverkleidung montierter Sicherheitssensor ein Objekt erkennt, während sich die Türverkleidung öffnet, wird die Türverkleidung angehalten. Wenn ein an der Türverkleidung montierter Sicherheitssensor beim Schließen der Türverkleidung ein Objekt erkennt, wird die Türverkleidung geöffnet. Jeder der Sensoren umfasst eine Lichtemissionseinheit, eine Lichtempfangseinheit und eine Steuereinheit, und der Sensor kann selbst einen Fehler in einer der Lichtemissionseinheiten, der Licht- Empfangseinheit und Steuereinheit erfassen.

Der Erfindung liegt die Aufgabe zugrunde, diese Nachteile zu beseitigen.

Diese Aufgabe wird durch eine Vorrichtung mit den Merkmalen des Anspruchs 1 gelöst.

Erfindungsgemaß sind die Sensoren der Vorrichtung aufeinanderfolgend in einem Sensorband angeordnet und als sogenannte Time of Flight-(ToF)-Sensoren ausgebildet. Mit solchen ToF-Sensoren können unterschiedliche Sensoraufgaben realisiert werden. Sie senden ein elektromagnetisches Signal, beispielsweise Lichtsignal aus und empfangen das an einem Objekt reflektierte Signal. Aus der Signallaufzeit wird der Abstand zwischen Sensor und Objekt bestimmt. Dies kann zum einen für die Erkennung von Hindernissen im Öffnungsbereich eines Tür- oder Fensterflügels und zum anderen zur Ansteuerung eines automatischen Tür- oder Fensterflügels verwendet werden. Damit kann ein und derselbe Typ von Sensoren für diese Aufgaben verwendet werden. Das Sensorband hat dadurch ein einheitliches, optisch ansprechendes Erscheinungsbild. Dieses Sensorband kann zudem für beliebige Arten von Türen oder Fenstern eingesetzt werden, also sowohl für Drehtüren, Schiebetüren, Karusselltüren, Drehfenster, Kippfenster und so weiter. Damit ist auch unter den verschiedenen Arten von Fenstern oder Türen ein einheitliches Erscheinungsbild gegeben.

Das erfindungsgemäße Sensorband besteht aus flexiblem Material, insbesondere Kunststoff. Es kann dadurch vorteilhaft auf gebogenen Türen oder Fenstern angebracht werden, beispielsweise Karusselltüren oder Rundbogenschiebetüren. Die einzelnen Sensormodule sitzen hierbei bevorzugt auf einer flexiblen Leiterplatte, welche von einem flexiblen Material um hüllt ist

Das Sensorband kann bevorzugt als Meterware hergestellt sein. Es ist dann insbesondere ablängbar, so dass es an den jeweiligen Einsatz angepasst werden kann.Erfindungsgemäß haben mindestens zwei der Sensoren eine voneinander verschiedene Funktion. Mindestens ein Sensor ist zur Überwachung auf Hindernisse ausgebildet, während mindestens ein Sensor zur Überwachung auf Annäherung einer Person ausgebildet ist.

Nach einer weiteren Ausgestaltung der Erfindung ist mindestens ein Sensor als Array ausgebildet, mit einer Matrix von n x m Einzelsensoren, wobei n und m jeweils für eine ganze Zahl > 1 stehen. Mittels Sensorarrays kann ein dreidimensionales Bild der reflektierenden Fläche, also des Hintergrunds oder eines erfassten Objekts aufgenommen werden.

Nach einer Ausgestaltung der Erfindung weisen die Sensoren zumindest teilweise einen gleichen Abstand voneinander auf. Es können aber auch bevorzugt in mindestens einem Bereich mehrere Sensoren mit einem geringeren Abstand zueinander angeordnet sein als in mindestens einem anderen Bereich. Dadurch kann eine Überwachung in bestimmten Bereichen gegenüber anderen Bereichen verstärkt sein. Der Abstand der Sensoren voneinander kann sich insbesondere an vorgegebenen Richtlinien orientieren, beispielsweise wenn auf Einklemmen von Fingern, Armen oder anderen Körperteilen überwacht werden muss. Besonders gefährliche Bereiche können so mit einer höheren Sensordichte abgesichert werden.

Nach einer weiteren Ausgestaltung der Erfindung sind mehrere Sensoren quer zur Längsrichtung des Sensorbandes versetzt zueinander angeordnet, insbesondere in zwei oder mehr zueinander parallelen Reihen. Auf diese Weise kann die Sensordichte vorteilhaft weiter erhöht werden. Hierdurch kann eine optimale Überwachung auf Hindernisse erreicht werden. Es tritt kein sogenannter Hick-Up auf, und der Fenster- oder Türflügel bleibt offen, bis der Durchgangsbereich komplett frei ist. Eine Sensorreihe kann dabei auch die Aktivierungsfunktion übernehmen, während eine andere Sensorreihe die Überwachungsfunktion übernimmt.

Nach einer weiteren vorteilhaften Ausgestaltung der Erfindung sind mehrere, insbesondere alle Sensoren, insbesondere parallel zueinander, an gemeinsame Versorgungsleitungen angeschlossen. Die Anzahl der benötigten Versorgungsleitu n-gen kann dadurch reduziert werden.

Ebenso können mehrere, insbesondere alle Sensoren, insbesondere parallel zueinander, an eine gemeinsame Signalleitung angeschlossen sein. Die Anzahl der Signalleitungen kann dadurch vorteilhaft reduziert werden.

Nach einer weiteren Ausgestaltung der Erfindung sind mehrere, insbesondere alle Sensoren an eine gemeinsame Busleitung angeschlossen zur Signalübertragung und/oder Kommunikation mit einer zentralen Steuer- und Auswerteeinheit. Die gemeinsame Busleitung kann auch zur Energieversorgung der Sensoren dienen, sogenannter Powerbus. Durch Verwendung einer gemeinsamen Busleitung können die Sensoren individuell mit der Zentrale kommunizieren.

Besonders bevorzugt ist es, wenn die Sensoren jeweils einen kommenden und einen gehenden Leitungsanschluss an die Busleitung aufweisen, wobei die jeweiligen Anschlüsse bevorzugt vor der ersten Inbetriebnahme bzw. Initialisierung voneinander getrennt sind. Damit ist eine sequentielle Adressierung der Sensoren in einfacher Weise möglich. Die individuelle Adressierung ist besonders vorteilhaft, weil hierdurch ein langes Sensorband verwendet werden kann, ohne dass ein aufwendiges Leitungssystem notwendig ist.

Nach einer weiteren Ausgestaltung der Erfindung weist mindestens ein Sensor, insbesondere alle Sensoren, eine Zusatzfunktion, insbesondere eine Anzeige, bevorzugt Leuchtanzeige, ein Beleuchtungsmittel, insbesondere Laserlicht, oder dergleichen auf. Der Einsatzbereich des Sensorbandes kann dadurch erweitert werden.

Die Erfassungsfeldhöhe der einzelnen Sensoren ist bevorzugt individuell einstellbar, insbesondere auch kleiner als die Höhe eines jeweiligen Sensors gegenüber einer Referenzfläche, insbesondere einem Boden, und insbesondere auch dynamisch. Damit kann die Erfassungsfeldhöhe an den jeweiligen Einsatz angepasst werden, beispielsweise an den Einsatz bei einem Türflügel oder einem Fensterflügel.

Nach einer weiteren Ausgestaltung der Erfindung weist mindestens ein Sensor, insbesondere alle Sensoren, ein optisches System, insbesondere eine optische Linse auf. Dadurch kann das Erfassungsfeld in gewünschter Weise fokussiert und/oder ausgerichtet werden.

Eine erfindungsgemäße Vorrichtung der zuvor beschriebenen Art kann insbesondere bei einer automatischen Tür, insbesondere Drehtür, Schiebetür oder Karusselltür, oder bei einem automatischen Fenster, insbesondere Dreh- oder Kippfenster, eingesetzt werden. Es ergeben sich die zuvor beschriebenen Vorteile.

Ein Verfahren zum Betreiben einer automatischen Tür oder eines automatischen Fensters mit einer Vorrichtung der zuvor beschriebenen Art kann bevorzugt dadurch gekennzeichnet sein, dass die Höhe der Erfassungsfelder der Sensoren durch ein Initialisierungsverfahren eingestellt wird, insbesondere durch ein zeitgesteuertes Verfahren. Des Weiteren ist ein solches Verfahren bevorzugt dadurch gekennzeichnet, dass sich die Sensoren selbst überwachen, insbesondere indem sie ein Signal ausgeben, wenn ein vorher vorhandener Hintergrund nicht mehr erfasst wird.

Nach einer weiteren vorteilhaften Ausgestaltung eines solchen Verfahrens wird die Signalleitung auf Leitungsbruch und/oder Kurzschluss überwacht.

Jeder Sensor kann darüber hinaus individuell parametriert werden und/oder sein Zustand kann individuell abgefragt werden.

Des Weiteren können die Sensoren bevorzugt mit der Zentrale intelligent kommunizieren, insbesondere mit eindeutiger Adressierung oder ohne Adressierung, also nachrichtenorientiert. Die Adressen der Sensoren können dabei bevorzugt sequentiell vergeben werden, insbesondere startend vom aus Sicht der Zentrale ersten Sensor. Diese Verfahren haben sich als besonders vorteilhaft herausgestellt.

Ausführungsbeispiele der Erfindung werden in der Zeichnung dargestellt und nachfolgend beschrieben. Es zeigen, jeweils in schematischer Darstellung,
- Fig. 1: eine Seitenansicht einer Sensorleiste (nicht erfindungsgemäß),
- Fig. 2: einen Abschnitt einer Sensorleiste (nicht erfindungsgemäß),
- Fig. 3: einen Abschnitt einer Variante zu Fig. 2,
- Fig. 4: einen Abschnitt einer weiteren Variante zu Fig. 2,
- Fig. 5: einen Abschnitt noch einer Variante zu Fig. 2,
- Fig. 6: die Anordnung einer Sensorleiste an einer Tür und einem Fenster (nicht erfindungsgemäß),
- Fig. 7: ein in eine Haube eines Schiebetürantriebs eingeschobenes Sensorband (erfindungsgemäß),
- Fig. 8: ein an der Haube einer Schiebetür angebrachte Sensorleiste (nicht erfindungsgemäß),
- Fig. 9: eine an der Hauptschließkante eines Schiebeflügels angebrachte Sensorleiste (nicht erfindungsgemäß),
- Fig. 10: eine Sensorleiste mit zwei Sensorreihen an zwei Seiten der Sensorleiste, die einen Winkel miteinander einschließen (nicht erfindungsgemäß),
- Fig. 11: zwei Sensorleisten mit zwei Sensorreihen mit untereinander versetzt angeordneten Sensoren (nicht erfindungsgemäß).

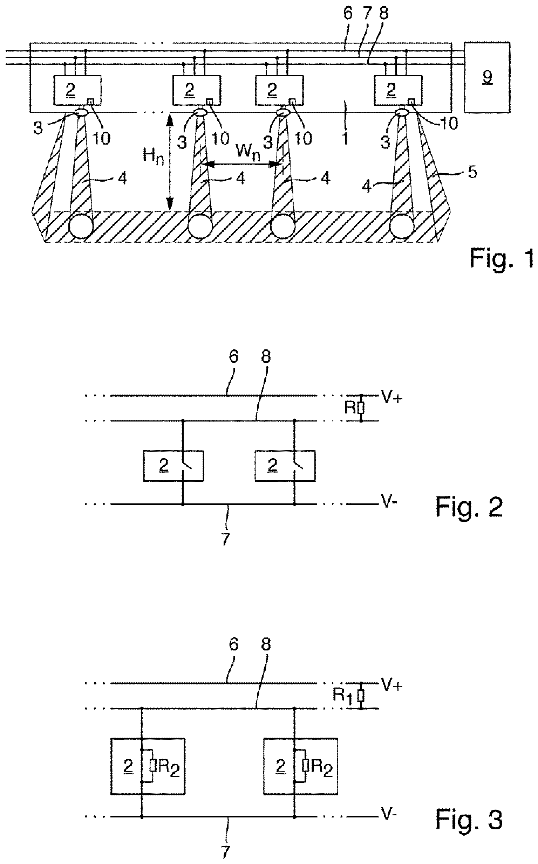

Die in Fig. 1 dargestellte Sensorleiste 1 weist N Time-of-Flight-Sensoren (ToF-Sensoren) 2 auf. Die ToF-Sensoren 2 sind in Längsrichtung der Sensorleiste aufeinanderfolgend angeordnet und jeweils mit einer optischen Linse 3 versehen. Dadurch ergibt sich jeweils ein kegelförmiges Erfassungsfeld 4, und insgesamt ein Detektionsbereich 5.

Die Sensoren 2 sind jeweils an zwei Versorgungsleitungen 6, 7 und eine Signal- und Kommunikationsleitung 8 parallel zueinander angeschlossen. Die Versorgungsleitungen 6, 7 und die Signal- und Kommunikationsleitung 8 sind an eine zentrale Steuerungs- und Auswerteeinheit 9 angeschlossen. Jeder Sensor 2 ist zudem mit einer eigenen Anzeigeeinrichtung 10 versehen.

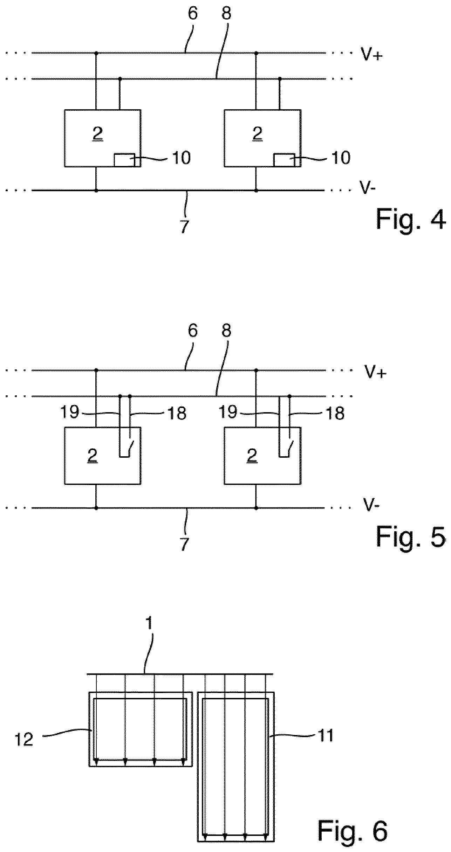

Die Höhe des Erfassungsfeldes Hn der Sensoren 2 ist jeweils gleich. Sie kann aber auch, wie in Fig. 6 dargestellt, unterschiedlich sein. Der Abstand Wn zwischen den Sensoren 2 kann untereinander jeweils gleich oder verschieden sein. Dabei kann auch ein Bereich der Sensorleiste 1 mit Sensoren 2 versehen sein, die untereinander einen gleichen Abstand aufweisen, sowie ein weiterer Bereich mit Sensoren 2, die voneinander oder zu dem ersten Bereich verschiedene Abstände Wn aufweisen.

Die Sensoren 2 können als einzelne Sensoren oder als Sensorarray ausgebildet sein. Ein Teil der Sensoren 2 kann zur Überwachung auf Hindernisse, ein anderer Teil zur Ansteuerung einer automatischen Tür oder eines automatischen Fensters ausgebildet sein.

Wie in Fig. 2 dargestellt, sind die Sensoren 2 parallel an die beiden Versorgungsleitungen 6, 7 sowie die Signalleitung 8 angeschlossen. In dieser einfachsten nicht erfindungsgemäßen Ausgestaltung gibt es genau ein digitales Signal, welches von einem beliebigen Sensor 2 bei Detektion eines Hindernisses oder der Annäherung einer Person über die Signalleitung 8 ausgegeben wird. Jeder Sensor 2 schaltet in dieser Ausführung das gemeinsame Signal auf V-, falls er in seinem Erfassungsbereich ein Objekt detektiert. Ist kein Sensor 2 in Detektion, liegt das Signal über den Pull-Up-Widerstand R auf V+.

Jeder Sensor 2 kennt die Höhe Hn seines Erfassungsfeldes. Hierfür sind verschiedene bekannte Initialisierungsverfahren einsetzbar. Das einfachste Verfahren ist ein zeitgesteuertes Verfahren und benötigt keinerlei zusätzliche Elektronik. Jeder Sensor 2 lernt als Höhe Hn den Abstand zum Hintergrund, der für eine Mindestzeit ansteht, beispielsweise eine Minute. Die Höhe des Erfassungsfeldes Hn kann aber auch individuell über die Kommunikationsleitung 8 eingestellt werden.

Die Sensoren 2 können sich auch selbst überwachen. Solange ein jeweiliger Sensor 2 seinen Hintergrund sieht, weiß dieser Sensor, dass er funktioniert. Insbesondere sind Sensorausrichtung, Optik und Elektronik in Ordnung. Im Fehlerfall schaltet der jeweilige Sensor 2 auf Detektion.

In einer verbesserten nicht erfindungsgemäßen Ausführung kann die Steuerungs- und Auswerteeinheit 9 die Signalleitung 8 auf Leitungsbruch und/oder Kurzschluss überwachen, In Fig. 3 ist eine einfache Überwachungsmöglichkeit dargestellt, bei welcher ein analoges Signal von der Steuerungs- und Auswerteeinheit ausgewertet wird. Es ist aber auch möglich, eine intelligente Überwachung auszuführen, indem die Steuer- und Auswerteeinheit die Information erhält, welcher der Sensoren 2 in Detektion ist. Zudem kann die Steuer- und Auswerteeinheit 9 jeden Sensor 2 individuell parametrieren, beispielsweise die Höhe Hn des Überwachungsbereichs. Weiterhin kann die Steuerungs- und Überwachungseinheit 9 den Zustand eines jeweiligen Sensors 2 individuell abfragen. Darüber hinaus kann die Steuerungs- und Auswerteeinheit 9 in jedem Sensor 2 zusätzliche Funktionen ausführen (siehe Fig. 4), beispielsweise einen Laserpunkt einschalten, der während der Inbetriebnahme das Erfassungsfeld am Hintergrund beleuchtet, oder ein oder mehrere LEDs einschalten, die in der Sensorleiste bzw. den einzelnen Sensoren integriert sind und einen Hinweis für einen Passanten geben, ob die Tür öffnet oder verriegelt ist. Schließlich kann eine Anzeige eingeschaltet werden, die den Monteur bei der Inbetriebnahme unterstützt.

Bei dieser intelligenten Ausführung kommuniziert jeder Sensor 2 mit der Steuer- und Auswerteeinheit 9 über Kommunikationsprotokolle mit eindeutiger Adressierung oder solche, die ohne Adressierung arbeiten, also nachrichtenorientiert. Die Adresse kann jedem Sensor 2 sequentiell, startend vom aus Sicht der Steuerungs- und Auswerteeinheit 9 ersten Sensor 2 vergeben werden. Dabei kann jeder Sensor 2 einen kommenden 18 und einen gehenden 19 Anschluss an die Kommunikationsleitung 8 besitzen, wobei in jedem Sensor 2 kommende und gehende Verbindung zunächst getrennt sind. Damit ist eine sequentielle Adressierung der Sensoren 2 möglich. Diese nicht erfindungsgemäße Ausgestaltung ist in Fig.5 dargestellt. Sie ist besonders vorteilhaft, da eine lange Sensorleiste 1, als Meterware, verwendet werden kann. Die tatsächlich benötigte Länge der Sensorleiste 1 kann dann jeweils durch Absägen bzw. Abschneiden hergestellt werden. Reststücke können gegebenenfalls zusammengesetzt werden. Die Sensorleisten 1 sind bevorzugt in einem Kunststoff- oder Metallprofil montiert. Bei einem hier nicht dargestellten Sensorband, welches Teil der erfindungsgemäßen Vorrichtung ist, in einem Kunststoffprofil montiert. Hier sitzen die einzelnen Sensormodule auf einer flexiblen Leiterplatte, welche von einem flexiblen Material umhüllt ist. Die Ausführung als Sensorband ist biegbar und daher zur Absicherung gebogener Elemente geeignet, also beispielsweise Karusselltüren oder Rundbogenschiebetüren.

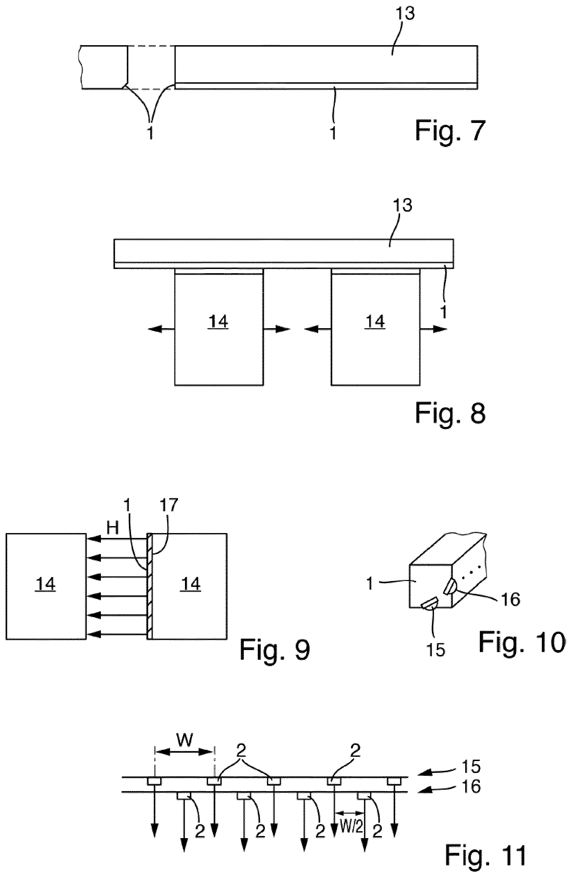

Das Sensorband 1 der erfindungsgemäßen Vorrichtung kann in die Haube eines Schiebetürantriebs eingeschoben werden, wie dies in Fig. 7 gezeigt ist. Dadurch ordnet sich das Sensorband oder die Sensorleiste optisch unter. Ebenso kann eine Sensorleiste 1 (dargestellt, aber nicht erfindungsgemäß) oder ein Sensorband (nicht dargestellt, aber erfindungsgemäß) außen an der Haube einer Schiebetür angebracht werden, wie dies in Fig. 8 dargestellt ist. Damit kann sowohl das Schließen als auch das Öffnen der Schiebetüren abgesichert und die Ansteuerung des Schiebetürantriebs bewirkt werden.

Die Sensorleiste 1 (dargestellt, aber nicht erfindungsgemäß) oder das Sensorband 1 (nicht dargestellt, aber erfindungsgemäß) kann auch mitfahrend montiert werden, wie dies in Fig. 9 dargestellt ist. Die Sensorleiste 1 oder das Sensorband 1 kann dabei an der Hauptschließkante 17 eines Schiebeflügels 14 angebracht sein. Insbesondere ein Sensorband 1 kann bevorzugt aufgeklebt werden.

Wie in Fig.10 nicht erfindungsgemäß dargestellt, können zwei Sensorreihen 15, 16 an einer Sensorleiste 1 angebracht sein, insbesondere an zwei Seiten der Sensorleiste 1, die einen Winkel miteinander einschließen, hier 90°. Eine der beiden Sensorreihen 15 kann zur Absicherung der Bandseite oder Bandgegenseite dienen, während die andere Sensorreihe 16 der Ansteuerung des automatischen Türantriebs dient.

Die Sensoren 2 können wie in Fig.11 nicht erfindungsgemäß dargestellt auch gegenüber der Längsrichtung der Sensorleiste 1 (dargestellt, aber nicht erfindungsgemäß) oder des Sensorbandes 1 (nicht dargestellt, aber erfindungsgemäß) quer versetzt in zwei Reihen 15, 16 angeordnet sein. Dadurch kann die Dichte des Detektionsbereichs erhöht werden.

Die Busleitung 8 kann auch als Powerbus ausgebildet sein. Die Sensoren kommunizieren dann über die beiden Versorgungsleitungen. Eine separate Kommunikationsleitung ist entbehrlich.

### Bezugszeichenliste

- 1: Sensorleiste oder Sensorband
- 2: Sensor
- 3: optische Linse
- 4: Erfassungsbereich
- 5: Detektionsbereich
- 6: Versorgungsleitung
- 7: Versorgungsleitung
- 8: Signal- und Kommunikationsleitung
- 9: Steuerungs- und Auswerteeinheit
- 10: Anzeige
- 11: Tür
- 12: Fenster
- 13: Haube
- 14: Schiebeflügel
- 15: erste Sensorreihe
- 16: zweite Sensorreihe
- 17: Hauptschließkante
- 18: kommender Leitungsanschluss
- 19: gehender Leitungsanschluss

## Patentansprüche

1. Vorrichtung zur Überwachung von Türen, Fenstern oder dergleichen auf Annäherung einer Person und/oder auf Hindernisse im Öffnungsbereich, mit mehreren Sensoren (2), zugehörigen Energieversorgungsleitungen (6, 7) sowie mindestens einer Signalleitung (8) zur Weitergabe eines Sensorsignals, wobei die Sensoren (2) als sogenannte Time-of-Flight Sensoren ausgebildet sind, **dadurch gekennzeichnet, dass** die Sensoren (2) aufeinanderfolgend in einem Sensorband (1) angeordnet sind und das Sensorband (1) aus flexiblem Material besteht, wobei mindestens zwei der Sensoren (2) eine voneinander verschiedene Funktion haben, wobei mindestens ein Sensor (2) zur Überwachung auf Hindernisse ausgebildet ist und wobei mindestens ein Sensor (2) zur Überwachung auf Annäherung einer Person ausgebildet ist.

2. Vorrichtung nach Anspruch 1, **dadurch gekennzeichnet, dass** das Band (1) aus flexiblem Material aus Kunststoff besteht.

3. Vorrichtung nach einem der vorhergehenden Ansprüche, **dadurch gekennzeichnet, dass** mindestens ein Sensor (2) als Sensorarray ausgebildet ist mit einer Matrix von n x m Einzelsensoren, wobei n und m jeweils für eine ganze Zahl >1 stehen.

4. Vorrichtung nach einem der vorhergehenden Ansprüche, **dadurch gekennzeichnet, dass** die Sensoren (2) zumindest teilweise einen gleichen Abstand (Wn) voneinander aufweisen.

5. Vorrichtung nach einem der vorhergehenden Ansprüche, **dadurch gekennzeichnet, dass** in mindestens einem Bereich des Sensorbandes (1) mehrere Sensoren (2) mit einem geringeren Abstand (Wn) zueinander angeordnet sind als in mindestens einem anderen Bereich.

6. Vorrichtung nach einem der vorhergehenden Ansprüche, **dadurch gekennzeichnet, dass** mehrere Sensoren (2) quer zur Längsrichtung des Sensorbandes (1) versetzt zueinander angeordnet sind, insbesondere in zwei oder mehr zueinander parallelen Reihen (15, 16).

7. Vorrichtung nach einem der vorhergehenden Ansprüche, **dadurch gekennzeichnet, dass** mehrere, insbesondere alle Sensoren (2), insbesondere parallel zueinander, an gemeinsame Versorgungsleitungen (6, 7) angeschlossen sind.

8. Vorrichtung nach einem der vorhergehenden Ansprüche, **dadurch gekennzeichnet, dass** mehrere, insbesondere alle Sensoren (2), insbesondere parallel zueinander, an eine gemeinsame Signalleitung (8) angeschlossen sind.

9. Vorrichtung nach einem der vorhergehenden Ansprüche, **dadurch gekennzeichnet, dass** mehrere, insbesondere alle Sensoren (2), an eine Busleitung (8) angeschlossen sind zur Signalübertragung und/oder Kommunikation mit einer zentralen Steuer- und Auswerteeinheit (9) und/oder zur Energieversorgung.

10. Vorrichtung nach Anspruch 9, **dadurch gekennzeichnet, dass** die Sensoren (2) jeweils einen kommenden (18) und einen gehenden (19) Leitungsanschluss an die Busleitung (8) aufweisen, die bevorzugt vor der ersten Inbetriebnahme bzw. Initialisierung voneinander getrennt sind.

11. Vorrichtung nach einem der vorhergehenden Ansprüche, **dadurch gekennzeichnet, dass** mindestens ein Sensor (2), insbesondere alle Sensoren, eine Zusatzfunktion, insbesondere eine Anzeige (10), bevorzugt Leuchtanzeige, ein Beleuchtungsmittel, insbesondere Laserlicht, oder dergleichen aufweisen.

12. Vorrichtung nach einem der vorhergehenden Ansprüche, **dadurch gekennzeichnet**, das Sensorband (1) als Meterware hergestellt und insbesondere ablängbar ausgebildet ist.

13. Vorrichtung nach einem der Ansprüche 8 bis 12, **dadurch gekennzeichnet, dass** das Sensorband (1) aus flexiblem Material eine flexible Leiterplatte mit den elektrischen Leitungen, Anschlüssen und Bauteilen sowie eine flexible Umhüllung aufweist.

14. Vorrichtung nach einem der vorhergehenden Ansprüche, **dadurch gekennzeichnet, dass** die Erfassungsfeldhöhe (Hn) der einzelnen Sensoren (2) individuell einstellbar ist, insbesondere auch kleiner als die Höhe vom Sensor (2) zu einer Referenzfläche, und insbesondere auch dynamisch.

15. Vorrichtung nach einem der vorhergehenden Ansprüche, **dadurch gekennzeichnet, dass** mindestens ein Sensor (2), insbesondere alle Sensoren, ein optisches System (3), insbesondere eine optische Linse, aufweisen.

16. Automatische Tür, insbesondere Drehtür, Schiebetür oder Karusselltür, oder automatisches Fenster, insbesondere Dreh- oder Kippfenster, mit mindestens einer Vorrichtung nach einem der vorhergehenden Ansprüche.

17. Verfahren zum Betreiben einer automatischen Tür oder eines automatischen Fensters nach Anspruch 16, **dadurch gekennzeichnet, dass** die Höhe (Hn) der Erfassungsfelder (4) der Sensoren (2) durch ein Initialisierungsverfahren eingestellt wird, insbesondere durch ein zeitgesteuertes Verfahren.

18. Verfahren zum Betreiben einer automatischen Tür oder eines automatischen Fensters nach Anspruch 17, **dadurch gekennzeichnet, dass** sich die Sensoren (2) selbst überwachen, indem sie ein Signal ausgeben, wenn ein vorher vorhandener Hintergrund nicht mehr erfasst wird.

19. Verfahren zum Betreiben einer automatischen Tür oder eines automatischen Fensters nach Anspruch17, **dadurch gekennzeichnet, dass** die Signalleitung (8) auf Leitungsbruch und/oder Kurzschluss überwacht wird.

20. Verfahren zum Betreiben einer automatischen Tür oder eines automatischen Fensters nach Anspruch 17, **dadurch gekennzeichnet, dass** jeder Sensor (2) individuell parametriert wird.

21. Verfahren zum Betreiben einer automatischen Tür oder eines automatischen Fensters nach Anspruch17, **dadurch gekennzeichnet, dass** der Zustand der Sensoren (2) individuell abgefragt wird.

22. Verfahren zum Betreiben einer automatischen Tür oder eines automatischen Fensters nach Anspruch¹⁷, **dadurch gekennzeichnet, dass** die Sensoren (2) mit der zentralen Steuer- und Auswerteeinheit (9) intelligent kommunizieren, insbesondere mit eindeutiger Adressierung oder ohne Adressierung, also nachrichtenorientiert.

23. Verfahren zum Betreiben einer automatischen Tür oder eines automatischen Fensters nach Anspruch 17, **dadurch gekennzeichnet, dass** die Adressen der Sensoren (2) sequentiell vergeben werden, insbesondere startend vom aus Sicht der zentralen Steuer- und Auswerteeinheit (9) ersten Sensor (2).

## Claims

1. Apparatus for monitoring doors, windows or the like for the approach of a person and/or obstacles in the opening region, having a plurality of sensors (2), associated energy supply lines (6, 7) and at least one signal line (8) for forwarding a sensor signal, wherein the sensors (2) are in the form of so-called time-of-flight sensors,
**characterized in that** the sensors (2) are successively arranged in a sensor strip (1) and the sensor strip (1) is composed of a flexible material, wherein at least two of the sensors (2) have a mutually different function, wherein at least one sensor (2) is designed to monitor for obstacles, and wherein at least one sensor (2) is designed to monitor for the approach of a person.

2. Apparatus according to Claim 1, **characterized in that** the strip (1) is composed of a flexible plastic material.

3. Apparatus according to one of the preceding claims, **characterized in that** at least one sensor (2) is in the form of a sensor array having a matrix of n x m individual sensors, where n and m each represent an integer >1.

4. Apparatus according to one of the preceding claims, **characterized in that** the sensors (2) are at least partially at the same distance (Wn) from one another.

5. Apparatus according to one of the preceding claims, **characterized in that**, in at least one region of the sensor strip (1), a plurality of sensors (2) are arranged at a shorter distance (Wn) from one another than in at least one other region.

6. Apparatus according to one of the preceding claims, **characterized in that** a plurality of sensors (2) are arranged in an offset manner with respect to one another transversely with respect to the longitudinal direction of the sensor strip (1), in particular in two or more rows (15, 16) which are parallel to one another.

7. Apparatus according to one of the preceding claims, **characterized in that** a plurality of sensors (2), in particular all sensors (2), are connected to common supply lines (6, 7), in particular in a manner parallel to one another.

8. Apparatus according to one of the preceding claims, **characterized in that** a plurality of sensors (2), in particular all sensors (2), are connected to a common signal line (8), in particular in a manner parallel to one another.

9. Apparatus according to one of the preceding claims, **characterized in that** a plurality of sensors (2), in particular all sensors (2), are connected to a bus line (8) for the purpose of transmitting signals and/or communicating with a central control and evaluation unit (9) and/or supplying energy.

10. Apparatus according to Claim 9, **characterized in that** the sensors (2) each have an incoming line connection (18) and an outgoing line connection (19) to the bus line (8), which are preferably disconnected from one another before initial activation or initialization.

11. Apparatus according to one of the preceding claims, **characterized in that** at least one sensor (2), in particular all sensors, has/have an additional function, in particular a display (10), preferably a light-emitting display, a lighting means, in particular laser light, or the like.

12. Apparatus according to one of the preceding claims, **characterized in that** the sensor strip (1) is produced as goods sold by the metre and can be cut to length, in particular.

13. Apparatus according to one of Claims 8 to 12, **characterized in that** the sensor strip (1) made of flexible material has a flexible printed circuit board having the electrical lines, connections and components as well as a flexible sheath.

14. Apparatus according to one of the preceding claims, **characterized in that** the capture field height (Hn) of the individual sensors (2) can be set individually, in particular can be set to be lower than the height from the sensor (2) to a reference area, and can also be set dynamically, in particular.

15. Apparatus according to one of the preceding claims, **characterized in that** at least one sensor (2), in particular all sensors, has/have an optical system (3), in particular an optical lens.

16. Automatic door, in particular rotating door, sliding door or revolving door, or automatic window, in particular side-hung window or bottom-hung window, having at least one apparatus according to one of the preceding claims.

17. Method for operating an automatic door or an automatic window according to Claim 16, **characterized in that** the height (Hn) of the capture fields (4) of the sensors (2) is set by means of an initialization method, in particular by means of a time-controlled method.

18. Method for operating an automatic door or an automatic window according to Claim 17, **characterized in that** the sensors (2) monitor themselves by outputting a signal if a previously present background is no longer captured.

19. Method for operating an automatic door or an automatic window according to Claim 17, **characterized in that** the signal line (8) is monitored for a line break and/or a short circuit.

20. Method for operating an automatic door or an automatic window according to Claim 17, **characterized in that** each sensor (2) is individually parameterized.

21. Method for operating an automatic door or an automatic window according to Claim 17, **characterized in that** the state of the sensors (2) is individually checked.

22. Method for operating an automatic door or an automatic window according to Claim 17, **characterized in that** the sensors (2) communicate with the central control and evaluation unit (9) in an intelligent manner, in particular with unique addressing or without addressing, that is to say in a message-oriented manner.

23. Method for operating an automatic door or an automatic window according to Claim 17, **characterized in that** the addresses of the sensors (2) are sequentially allocated, in particular starting from the first sensor (2) from the point of view of the central control and evaluation unit (9) .

## Revendications

1. Dispositif pour la surveillance de portes, fenêtres ou similaires en vue de détecter l'approche d'une personne et/ou d'obstacles dans la zone d'ouverture, comprenant plusieurs capteurs (2), des lignes d'alimentation en énergie (6, 7) associées ainsi qu'au moins une ligne de signal (8) destinée à retransmettre un signal de capteur, les capteurs (2) étant réalisés sous la forme de capteurs dits à temps de vol, **caractérisé en ce que** les capteurs (2) sont disposés les uns après les autres dans une bande de capteurs (1) et la bande de capteurs (1) se compose d'un matériau flexible, au moins deux des capteurs (2) ayant une fonction différente l'un de l'autre, au moins un capteur (2) étant configuré pour la surveillance en vue de détecter la présence d'obstacles et au moins un capteur (2) étant configuré pour la surveillance en vue de détecter l'approche d'une personne.

2. Dispositif selon la revendication 1, **caractérisé en ce que** la bande (1) se compose d'un matériau flexible en matière plastique.

3. Dispositif selon l'une des revendications précédentes, **caractérisé en ce qu'**au moins un capteur (2) est réalisé sous la forme d'un réseau de capteurs, avec une matrice de n x m capteurs individuels, n et m représentant respectivement un nombre entier > 1.

4. Dispositif selon l'une des revendications précédentes, **caractérisé en ce que** les capteurs (2) présentent au moins en partie un écart (Wn) identique entre eux.

5. Dispositif selon l'une des revendications précédentes, **caractérisé en ce que** dans au moins une zone de la bande de capteurs (1), plusieurs capteurs (2) sont disposés avec un écart (Wn) plus petit entre eux que dans au moins une autre zone.

6. Dispositif selon l'une des revendications précédentes, **caractérisé en ce que** plusieurs capteurs (2) sont disposés en étant décalés les uns par rapport aux autres transversalement par rapport à la direction longitudinale de la bande de capteurs (1), notamment en deux rangées (15, 16) ou plus parallèles les unes aux autres.

7. Dispositif selon l'une des revendications précédentes, **caractérisé en ce que** plusieurs, notamment tous les capteurs (2), sont raccordés, notamment en parallèle les uns des autres, à des lignes d'alimentation (6, 7) communes.

8. Dispositif selon l'une des revendications précédentes, **caractérisé en ce que** plusieurs, notamment tous les capteurs (2), sont raccordés, notamment en parallèle les uns des autres, à une ligne de signal (8) commune.

9. Dispositif selon l'une des revendications précédentes, **caractérisé en ce que** plusieurs, notamment tous les capteurs (2), sont raccordés à une ligne de bus (8) servant à la transmission de signal et/ou à la communication avec une unité centrale de commande et d'interprétation (9) et/ou servant à l'alimentation en énergie.

10. Dispositif selon la revendication 9, **caractérisé en ce que** les capteurs (2) possèdent respectivement un raccordement de ligne arrivant (18) et un partant (19) au niveau de la ligne de bus (8), lesquels sont séparés l'un de l'autre de préférence avant la première mise en service ou l'initialisation.

11. Dispositif selon l'une des revendications précédentes, **caractérisé en ce qu'**au moins un capteur (2), notamment tous les capteurs (2), possèdent une fonction supplémentaire, en particulier un indicateur (10), de préférence un indicateur lumineux, un moyen d'éclairage, notamment une lumière laser, ou similaire.

12. Dispositif selon l'une des revendications précédentes, **caractérisé en ce que** la bande de capteurs (1) est fabriquée en tant que marchandise au mètre et est notamment réalisée de manière à pouvoir être coupée à longueur.

13. Dispositif selon l'une des revendications 8 à 12, **caractérisé en ce que** la bande de capteurs (1) en matériau flexible possède un circuit imprimé souple comprenant les lignes électriques, les bornes et les composants ainsi qu'un enrobage flexible.

14. Dispositif selon l'une des revendications précédentes, **caractérisé en ce que** la hauteur du champ de détection (Hn) des différents capteurs (2) peut être réglée individuellement, notamment aussi plus petite que la hauteur du capteur (2) par rapport à une surface de référence, et notamment aussi dynamiquement.

15. Dispositif selon l'une des revendications précédentes, **caractérisé en ce qu'**au moins un capteur (2), notamment tous les capteurs, possèdent un système optique (3), notamment une lentille optique.

16. Porte automatique, notamment porte pivotante, porte coulissante ou porte tourniquet, ou fenêtre automatique, notamment fenêtre pivotante ou basculante, comprenant au moins un dispositif selon l'une des revendications précédentes.

17. Procédé pour faire fonctionner une porte automatique ou une fenêtre automatique selon la revendication 16, **caractérisé en ce que** la hauteur (Hn) du champ de détection (4) des capteurs (2) est réglée par un procédé d'initialisation, notamment par un procédé commandé dans le temps.

18. Procédé pour faire fonctionner une porte automatique ou une fenêtre automatique selon la revendication 17, **caractérisé en ce que** les capteurs (2) se surveillent eux-mêmes en délivrant un signal lorsqu'un fond qui était présent précédemment n'est plus détecté.

19. Procédé pour faire fonctionner une porte automatique ou une fenêtre automatique selon la revendication 17, **caractérisé en ce que** la ligne de signal (8) est surveillée en vue de détecter une rupture de ligne et/ou un court-circuit.

20. Procédé pour faire fonctionner une porte automatique ou une fenêtre automatique selon la revendication 17, **caractérisé en ce que** chaque capteur (2) est paramétré individuellement.

21. Procédé pour faire fonctionner une porte automatique ou une fenêtre automatique selon la revendication 17, **caractérisé en ce que** l'état des capteurs (2) est interrogé individuellement.

22. Procédé pour faire fonctionner une porte automatique ou une fenêtre automatique selon la revendication 17, **caractérisé en ce que** les capteurs (2) communiquent de manière intelligente avec l'unité centrale de commande et d'interprétation (9), notamment avec un adressage univoque ou sans adressage, c'est-à-dire en mode message.

23. Procédé pour faire fonctionner une porte automatique ou une fenêtre automatique selon la revendication 17, **caractérisé en ce que** les adresses des capteurs (2) sont attribuées séquentiellement, notamment en commençant par le premier capteur (2) du point de vue de l'unité centrale de commande et d'interprétation (9).
